(19) Europäisches Patentamt
European Patent Office
Office européen des brevets

(11) EP 3 418 315 B1

(12) **EUROPEAN PATENT SPECIFICATION**

(45) Date of publication and mention of the grant of the patent:
**02.12.2020 Bulletin 2020/49**

(21) Application number: **17750062.6**

(22) Date of filing: **23.01.2017**

(51) Int Cl.:
***C08G 64/02*** *(2006.01)* ***C08G 18/44*** *(2006.01)*
***C08G 18/08*** *(2006.01)* ***C08G 18/10*** *(2006.01)*
***C08G 18/24*** *(2006.01)* ***C08G 18/34*** *(2006.01)*
***C08G 18/66*** *(2006.01)* ***C08G 18/75*** *(2006.01)*
***C08G 64/30*** *(2006.01)*

(86) International application number:
**PCT/JP2017/002102**

(87) International publication number:
**WO 2017/138337 (17.08.2017 Gazette 2017/33)**

(54) **POLYCARBONATE POLYOL**
POLYCARBONATPOLYOL
POLYCARBONATE POLYOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2016 JP 2016022301**
**20.04.2016 JP 2016084209**

(43) Date of publication of application:
**26.12.2018 Bulletin 2018/52**

(73) Proprietor: **UBE Industries, Ltd.**
**Ube-shi, Yamaguchi 755-8633 (JP)**

(72) Inventors:
- **SUZUKI Katsuki**
**Ube-shi**
**Yamaguchi 755-8633 (JP)**
- **NAKANO Hiroyuki**
**Ube-shi**
**Yamaguchi 755-8633 (JP)**
- **MIZOKAWA Yuki**
**Ube-shi**
**Yamaguchi 755-8633 (JP)**
- **KAWASHITA Tetsuro**
**Ube-shi**
**Yamaguchi 755-8633 (JP)**
- **SEYA Mototsugu**
**Ube-shi**
**Yamaguchi 755-8633 (JP)**
- **AKAO Kiyotaka**
**Ube-shi**
**Yamaguchi 755-8633 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 849 814** **EP-A1- 2 940 056**
**WO-A1-2006/088152** **JP-A- 2006 225 543**
**JP-A- 2009 280 665** **JP-A- 2009 280 665**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present invention relates to a novel polycarbonate polyol. The polycarbonate polyol is a compound useful as a raw material of various types of polyurethane resins.

[Background Art]

Conventionally, polycarbonate polyols have been popularly used as a raw material of various types of polyurethane resins.
Among them, polycarbonate polyols derived from 2-methyl-1,3-propanediol are known as an amorphous polycarbonate polyol.
For example, a method for reacting 2-methyl-1,3-propanediol and dimethyl carbonate in the presence of sodium methoxide to obtain polycarbonate diol as a viscous liquid is disclosed (see JP 2005-325219 for example).
Moreover, a method for reacting 2-methyl-1,3-propanediol and ethylene carbonate in the presence of lead acetate to obtain polycarbonate diol as a viscous liquid is disclosed (see JP 2006-225543 for example)
In addition, a method for reacting 2-methyl-1,3-propanediol, alkylene polyol other than 2-methyl-1,3-propanediol, and ethylene carbonate in the presence of lead acetate to obtain a polycarbonate polyol copolymer which includes a specific amount of 5-methyl-1,3-dioxan-2-on (a cyclic carbonate) is disclosed (see WO 2006/088152 A1 (Japanese Patent No. 5068159), for example).
Further, a method for reacting 2-methyl-1,3-propanediol and diethyl carbonate in the presence of sodium ethoxide to obtain polycarbonate diol as a viscous liquid is disclosed (see JP 2012-46659 (Japanese Patent No. 5614637), for example).

[Citation List]

[Patent Literature]

[Patent Literature 1] JP 2005-325219
[Patent Literature 2] JP 2006-225543
[Patent Literature 3] WO 2006/088152 A1 (Japanese Patent No. 5068159)
[Patent Literature 4] JP 2012-46659 (Japanese Patent No. 5614637)

[Summary of Invention]

[Problems to be solved by the invention]

JP 2005-325219 discloses polycarbonate diol derived from 2-methyl-1,3-propanediol as Examples (only 2 examples), but neither of their functions nor characteristics have been disclosed and neither the functions nor characteristics of polyurethane derived from the polycarbonate diol have been disclosed.
JP 2006-225543 has such a problem that it is necessary to use a lead acetate that is problematic in terms of safety due to its high toxicity in producing polycarbonate diol derived from 2-methyl-1,3-propanediol. Note that in JP 2006-225543, it is disclosed that the polyurethane film derived from a copolymer obtained from 2-methyl-1,3-propanediol, 1,4-butanediol, and ethylene carbonate has poor characteristics (Comparative Example 7).
WO 2006/088152 has such a problem that it is necessary to use a lead acetate that is problematic in terms of safety due to its high toxicity in producing polycarbonate diol derived from 2-methyl-1,3-propanediol.
JP 2012-46659 discloses polycarbonate diol derived from 2-methyl-1,3-propanediol (only in example 4), but it merely discloses the reaction rate for urethanization and neither the functions nor the characteristics of the obtained urethane has been disclosed.
As described above, in any of the above-mentioned Patent Literatures, almost no evaluation of polyurethane derived from polycarbonate diol based on 2-methyl-1,3-propanediol has been given. In addition, it has been known that a polymer often includes plural types of repeating units as a result of denaturation even if it has been polymerized from a single monomer and that the physical properties of the polymer vary according to the composition ratio between the primary repeating units and mixed other repeating units even if the same primary repeating unit is included. Accordingly, it is necessary to perform precise control of the composition to control the properties of a polymer. More specifically, in

the conventional techniques, no detailed examination has been given as to what structure of a repeating unit included in the above-mentioned polycarbonate polyol is necessary to exert a useful function as a polyurethane.

Under these circumstances, a polycarbonate polyol derived from 2-methyl-1,3-propanediol that is capable of satisfying a desired function when polyurethane and the like is derived from it has been desired.

The object of the present invention is to provide a polycarbonate polyol derived from 2-methyl-1,3-propanediol that is capable of solving the above-mentioned problems and exhibiting a useful function when polyurethane or polyurethane acrylate is derived from it.

[Means to Solve the Problems]

The problem to be solved by the present invention is solved by a polycarbonate polyol including repeating units represented by the following Formula (A); repeating units having a specific structure of 4 or 6 carbon atoms by an amount in a specific range; and a terminal hydroxyl group.

[Effect of the Invention]

The present invention is capable of providing a polycarbonate polyol having a high elongation and stress at break point, an excellent resistance to solvent, and an excellent tackiness when polyurethane or polyurethane acrylate is derived therefrom.

[Modes for Carrying Out the Invention]

(Polycarbonate polyol)

An embodiment of the polycarbonate polyol according to the present invention is a polycarbonate polyol including repeating units represented by the following Formula (A); repeating units represented by the following Formula (D); and a terminal hydroxyl group, wherein the ratio of the unit represented by the following Formula (A) is 99.0 to 99.8 mol % and the ratio of the unit represented by the following Formula (D) is 0.1 to 0.8 mol % to the total of all the repeating units included in the polycarbonate polyol.

[Formula 1]

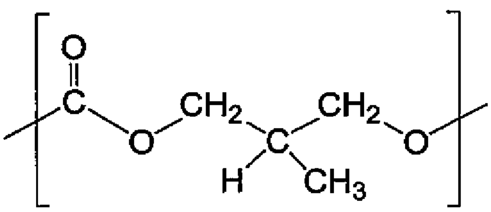

(A)

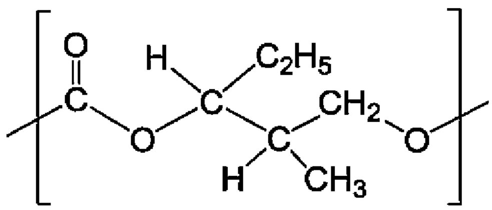

(D)

(Repeating units)

All the repeating units included in polycarbonate polyol are components derived from monomers constituting polycarbonate polyol, and the number of all the repeating units is equivalent to the number of the monomers.

Accordingly, the total number of all the repeating units (the total number of moles of all the monomers) and the number of each repeating unit (the number of moles of each monomer) can be calculated by measuring the number of monomers included in the polycarbonate.

For the method of measuring the monomer, a method can be used in which, for example, polycarbonate polyol, ethanol, and a base are mixed and the liquid mixture is heated for alcoholysis to obtain a monomer, and then the obtained monomer is analyzed by gas chromatography.

Note that another method can be used for the measurement of monomer in which polycarbonate polyol is directly subjected to proton nuclear magnetic resonance spectroscopy ($^1$H-NMR).

Examples of the monomer constituting the repeating units represented by Formula (A) include 2-methyl-1,3-propanediol.

Examples of the monomer constituting the repeating units represented by Formula (D) include 2-methyl-1,3-pentanediol (also denoted as "1-ethyl-2-methyl propanediol" when a propylene group is regarded as a main chain).

(Repeating units represented by Formula (A))

Specifically, the repeating units represented by Formula (A) is a repeating unit formed by a reaction between 2-methyl-1,3-propanediol and a carbonate, for example.

The ratio of the repeating units represented by Formula (A) to all the repeating units included in polycarbonate polyol is 99.0 to 99.8 mol %, preferably 99.1 to 99.7 mol %, and more preferably 99.2 to 99.6 mol %.

By employing these ranges for the ratio, it is enabled that a polyurethane derived from the polycarbonate polyol has a high flexibility, i.e., a high elongation and stress at break point. In addition, an excellent tackiness can be obtained.

(Repeating units represented by Formula (D))

Specifically, the repeating units represented by Formula (D) is a repeating unit formed by a reaction between 2-methyl-1,3-pentanediol and a carbonate, for example.

Note that the unit represented by Formula (D) includes repeating units that are regioisomer, which is represented by the following Formula (D') (the repeating units represented by Formula (D) and the one represented by Formula (D') are equivalent as a repeating unit).

[Formula 2]

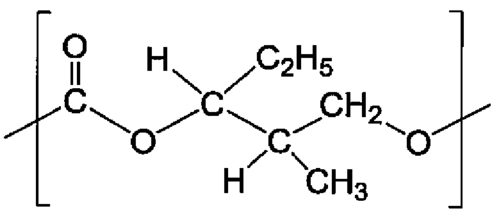

(D)

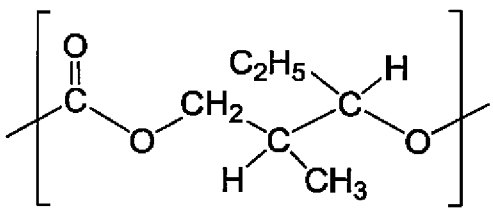

(D')

Further, a "conformational isomers" may exist in the repeating units represented by Formula (D) as represented by the following Formulae. More specifically, a "trans type", in which the methyl group exists on the opposite side to the methyl group of the side chain (Formula (D-1) and Formula (D-2)), and a "cis type", in which the methyl group exists on the same side of the methyl group of the side chain (Formula (D-3) and Formula (D-4)), may exist.

The four types of repeating units may exist in the polycarbonate polyol, and in such structures, the linearity of the polycarbonate polyol is secured due to the excessive amount of trans type repeating units, and as a result, the modulus of elasticity of polyurethane obtained from the polycarbonate polyol is assumed to increase. Accordingly, the molar ratio of the trans type/cis type is preferably 1.05 to 100, more preferably 1.1 to 50, and yet more preferably 1.2 to 30.

[Formula 3]

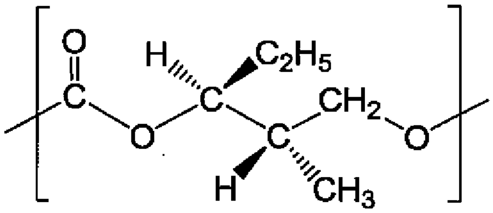

(D-1)

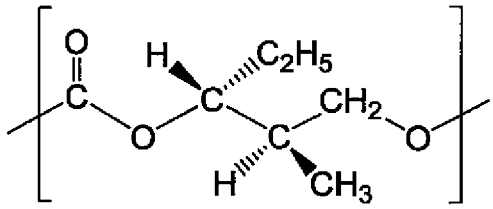

(D-2)

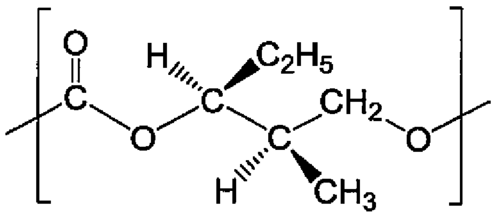

(D-3)

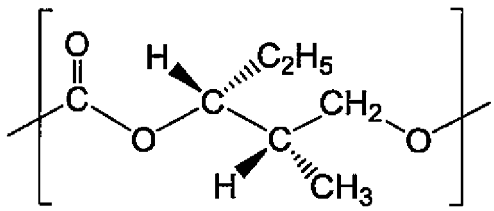

(D-4)

The ratio of the repeating units represented by Formula (D) to all the repeating units included in polycarbonate polyol is 0.1 to 0.9 mol %, preferably 0.1 to 0.8 mol %.

By employing these ranges for the ratio, a higher flexibility, i.e., a higher elongation and stress at break point can be obtained without degradation of tackiness of polyurethane derived from the polycarbonate polyol. It is preferable to employ these ranges because the reaction rate for urethanization will not be decreased caused due to the secondary hydroxyl group included in the monomers constituting the repeating units represented by Formula (D).

Another embodiment of the polycarbonate polyol according to the present invention is a polycarbonate polyol including repeating units represented by said Formula (A); repeating units represented by said Formula (D); and further repeating units represented by the following Formula (B) existing at a ratio of 0.5 mol % or less to all the repeating units included in the polycarbonate polyol.

[Formula 4]

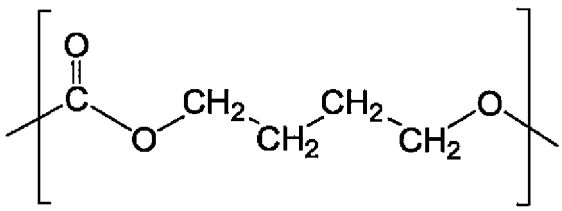

(B)

Yet another embodiment of the polycarbonate polyol according to the present invention is a polycarbonate polyol including repeating units represented by the following Formula (A); repeating units represented by the following Formula (D); and further repeating units represented by the following Formula (C) existing at a ratio of 0.2 mol % or less to all the repeating units included in the polycarbonate polyol.

[Formula 5]

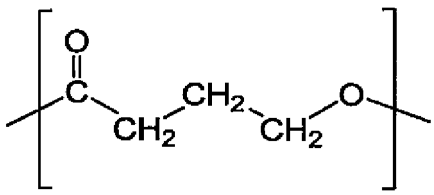

(C)

Examples of the monomer constituting the repeating units represented by Formula (B) include 1,4-butanediol.

Examples of the monomer constituting the repeating units represented by Formula (C) include γ-butyrolactone, hydroxybutanoic acid and esters thereof.

(Repeating units represented by Formula (B))

Specifically, the repeating units represented by Formula (B) is a repeating unit formed by a reaction between 1,4-butanediol and a carbonate, for example.

The ratio of the repeating units represented by Formula (B) to all the repeating units included in the polycarbonate polyol is 0.5 mol % or less, preferably 0.1 to 0.5 mol %, more preferably 0.1 to 0.4 mol %, and yet more preferably 0.1 to 0.3 mol %.

By employing these ranges for the ratio mentioned above, a higher flexibility, i.e., a higher elongation and stress at break point can be obtained without degradation of tackiness of the polyurethane derived from the polycarbonate polyol.

(Repeating units represented by Formula (C))

The repeating units represented by Formula (C) is a repeating unit formed by ring opening of γ-butyrolactone, condensation of hydroxybutanoic acid, or dealcoholization of a hydroxybutanoic acid ester and the like.

The ratio of the repeating units represented by Formula (C) to all the repeating units included in polycarbonate polyol is 0.2 mol % or less, preferably 0.01 to 0.2 mol %, more preferably 0.01 to 0.15 mol %, and yet more preferably 0.02 to 0.15 mol %.

By employing these ranges for the ratio mentioned above, the resistance to solvent of the polyurethane derived from the polycarbonate polyol, particularly the durability to oleic acid (resistance to oleic acid), which is component of sweat, can be increased.

Yet another embodiment of the polycarbonate polyol according to the present invention is a polycarbonate polyol including repeating units represented by the above Formula (A) at a ratio of 99.0 to 99.8 mol % to all the repeating units included in the polycarbonate polyol; repeating units represented by the above Formula (D) at a ratio of 0.1 to 0.8 mol % to all the repeating units included in the polycarbonate polyol; further, repeating units represented by the above Formula (B) at a ratio of 0.5 mol % or less to all the repeating units included in the polycarbonate polyol; yet further, repeating units represented by the above Formula (C) at a ratio of 0.2 mol % or less to all the repeating units included in the polycarbonate polyol; and a terminal hydroxyl group.

Yet another embodiment of the polycarbonate polyol according to the present invention is a polycarbonate polyol including repeating units represented by the following Formula (A); repeating units represented by the following Formula (B); and a terminal hydroxyl group, in which the ratio of the unit represented by the following Formula (A) is 99.0 to 99.8 mol % and the ratio of the unit represented by the following Formula (B) is 0.5 mol % or less to the total of all the repeating units included in the polycarbonate polyol.

[Formula 6]

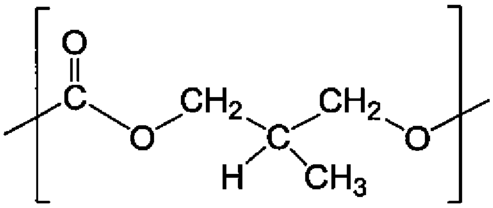

(A)

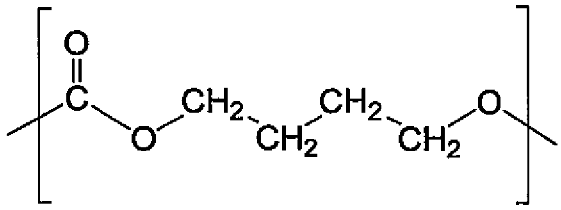

(B)

Yet another embodiment of the polycarbonate polyol according to the present invention is a polycarbonate polyol including repeating units represented by the above Formula (A); repeating units represented by the above Formula (C); and a terminal hydroxyl group, in which the ratio of the repeating units represented by the above Formula (A) is 99.0 to 99.8 mol % and the ratio of the repeating units represented by the above Formula (C) is 0.2 mol % or less to all the repeating units included in the polycarbonate polyol.

[Formula 7]

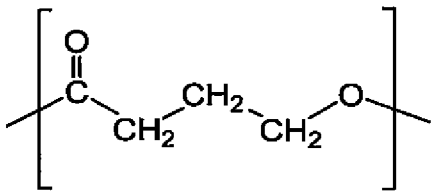

(C)

Yet another embodiment of the polycarbonate polyol according to the present invention is a polycarbonate polyol including repeating units represented by the above Formula (A); the repeating units represented by the above Formula (B) and Formula (C); and a hydroxyl group existing at both terminals, in which the ratio of the repeating units represented by the above Formula (A) is 99.0 to 99.8 mol %, the ratio of the repeating units represented by the above Formula (B) is 0.5 mol % or less, and the ratio of the repeating units represented by the above Formula (C) is 0.2 mol % or less to all the repeating units included in the polycarbonate polyol.

Yet another embodiment of the polycarbonate polyol according to the present invention is a polycarbonate polyol including the repeating units represented by the above Formula (A) at a ratio of 99.0 to 99.8 mol % to all the repeating units included in the polycarbonate polyol; the above Formula (B) at a ratio of 0.5 mol % or less to all the repeating units included in the polycarbonate polyol; the repeating units represented by the above Formula (C) at a ratio of 0.2 mol % or less to all the repeating units included in the polycarbonate polyol; a hydroxyl group existing at both terminals; and further, the repeating units represented by the above Formula (D) at a ratio of 0.1 to 0.8 mol % to all the repeating units included in the polycarbonate polyol.

[Formula 8]

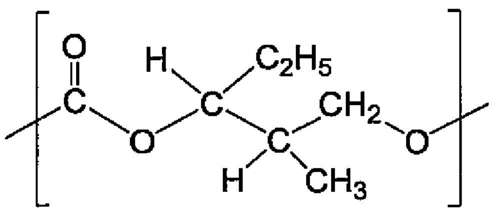

(D)

(Other repeating units)

The polycarbonate polyol according to the present invention may include any repeating units other than the repeating units represented by the above Formulae (A) to (D) as long as each of the repeating units satisfy the ratio of content respectively (hereinbelow, referred to as "other repeating unit(s)"). Examples of the monomer constituting the other repeating unit (other monomer) include diols having 2 to 12 carbon atoms such as 1,2-ethanediol, 1,3-propanediol, 3-oxa-1,5-pentanediol (diethylene glycol), 2,2-dimethyl-1,3-propanediol, 1,5-pentanediol, 2-methyl-1,5-pentanediol, 1,5-hexanediol, 1,6-hexanediol, 1,4-cyclohexanediol, 3-methyl-1,5-pentanediol, 1,8-octanediol, and 1,4-cyclohexanedimethanol; lactones having 5 to 12 carbon atoms except for γ-butyrolactone such as valerolactone and caprolactone; and hydroxycarboxylic acids having 5 to 12 carbon atoms except for hydroxybutanoic acid such as hydroxypentanoic acid and hydroxyhexanoic acid.

The other repeating units may form any of the repeating units by the method described above for the repeating units represented by the above Formulae (A) to (D) according to the type of the monomer.

The ratio of the other repeating units included in the polycarbonate polyol is a ratio which is the difference between the total of the ratios of the repeating units represented by Formulae (A) to (D) and all the repeating units, and is preferably 0.05 to 0.35 mol %.

By employing the above-mentioned range for the ratio, it is enabled that the functions of the polycarbonate polyol according to the present invention are not impaired.

(Number average molecular weight of the polycarbonate polyol)

The number average molecular weight of the polycarbonate polyol according to the present invention can be appropriately adjusted according to the purpose, and is preferably 100 to 5,000 more preferably 200 to 4,000, and yet more preferably 300 to 3,000.

Note that the number average molecular weight herein refers to the number average molecular weight calculated on the basis of a hydroxyl value measured in compliance with JIS K 1557. Specifically, the number average molecular weight is calculated by a method which uses a terminal group assay and in which a hydroxyl value is measured, by using the following formula: (56.1 × 1,000 × valence)/hydroxyl value (where the unit of the hydroxyl value is [mgKOH/g]). In the above-mentioned expression, the valence is the number of hydroxyl groups in one molecule.

By employing these ranges, the polycarbonate polyol becomes liquid form which is easy to handle, and thus the low-temperature characteristics of polyurethane derived from the polycarbonate polyol become better.

(Preparation of the polycarbonate polyol)

A method for preparing the polycarbonate polyol according to the present invention (hereinafter may be referred to also as the "reaction of the present invention") is not limited to a particular method, and the polycarbonate polyol according to the present invention can be suitably produced by a method in which, for example, 2-methyl-1,3-propanediol (a component of the structure represented by Formula (A)), 2-methyl-1,3-pentanediol (a component of the structure represented by Formula (D)), at least one of 1,4-butanediol (a component of the structure represented by Formula (B)) and β-butyrolactone or hydroxybutanoic acid (a component of the structure represented by Formula (C)); as well as any other monomer (a component of the other repeating units); carbonate; and a catalyst are mixed, and the mixture is caused to reaction while the low-boiling point components (such as alcohol that is produced as a byproduct) are distilled off.

Note that the reaction of the present invention can be run also by a method in which the reaction is run by plural times, i.e., by a method in which a prepolymer of the polycarbonate polyol (having a molecular weight lower than the molecular weight of the target polycarbonate polyol) is obtained, and then the obtained prepolymer is caused to react so as to increase the molecular weight.

The 2-methyl-1,3-pentanediol and the other monomers, may be previously contained in 2-methyl-1,3-propanediol used as the main raw material.

(Carbonic acid ester)

Examples of the carbonate used in the reaction of the present invention include dialkyl carbonates such as dimethyl carbonate, diethyl carbonate, and methyl ethyl carbonate; diaryl carbonates such as diphenyl carbonate; and cyclic carbonates such as ethylene carbonate, propylene carbonate (4-methyl-1,3-dioxolan-2-on, trimethylene carbonate), butylene carbonate (4-ethyl-1,3-dioxolan-2-on, tetramethylene carbonate), and 5-methyl-1,3-dioxan-2-on, and among them, dimethyl carbonate, diethyl carbonate, and ethylene carbonate are preferably used.

Note that these carbonates can be used alone or as a mixture of two or more of them.

The usage of these carbonates is preferably 0.8 to 2.0 mol, and more preferably 0.9 to 1.5 mol to 1 mol of 2-methyl-1,3-propanediol.

By employing these ranges for the ratio mentioned above, the desired polycarbonate polyol can be efficiently obtained at a sufficient reaction rate.

(Reaction temperature and reaction pressure)

The reaction temperature for the reaction of the present invention can be appropriately adjusted according to the type of the carbonate, and is preferably 50 to 250°C, and more preferably 70 to 230°C.

In addition, the reaction pressure for the reaction of the present invention is not limited to a particular pressure as long as it is a pressure at which the reaction is run while the low-boiling point components are removed, and the reaction of the present invention is preferably run under normal pressure or reduced pressure.

By employing these ranges for the reaction temperature and reaction pressure mentioned above, the desired polycarbonate polyol can be efficiently obtained without causing any consecutive reaction or side reaction.

(Catalyst)

As a catalyst used in the reaction of the present invention, a publicly known transesterification catalyst can be used, and examples of the catalyst include metals such as lithium, sodium, potassium, rubidium, cesium, magnesium, calcium, strontium, barium, zinc, aluminium, titanium, zirconium, cobalt, germanium, tin, or cerium; and hydroxides, alkoxide, carboxylate, carbonate, hydrogencarbonate, sulfate, phosphate, nitrate, or organic metals thereof, and among them, sodium hydride, titanium tetraisopropoxide, titanium tetrabutoxide, zirconium tetrabutoxide, zirconium acetylacetonate, zirconium oxyacetate, dibutyltin dilaurate, dibutyltin dimethoxide, and dibutyltin oxide are preferably used.

Note that these catalysts can be used alone or as a mixture of two or more of them.

The usage of the catalyst is preferably 0.001 to 0.1 mmol, more preferably 0.005 to 0.05 mmol, and yet more preferably 0.01 to 0.03 mmol to 1 mol of 2-methyl-1,3-propanediol.

By employing these ranges for the ratio mentioned above, the desired polycarbonate polyol can be efficiently obtained without having to perform complex post treatment.

Note that the catalyst may be used in a batch at the start of the reaction or used separately for two or more loads at the start of the reaction and after the start of the reaction, and the like.

[Polyurethane]

Polyurethane can be obtained by a reaction between the polycarbonate polyol according to the present invention obtained in the above-described manner and polyisocyanate (hereinafter be referred to also as "polyurethanization reaction").

Polyurethane derived from the polycarbonate polyol according to the present invention has a high elongation at break point and is an extremely useful material.

(Polyisocyanate)

The polyisocyanate mentioned above can be appropriately selected according to the objective and purpose of use, and examples of the polyisocyanate include aromatic aliphatic diisocyanate such as 2,4-tolylene diisocyanate, 2,6-tolylene diisocyanate, diphenylmethane-4,4'-diisocyanate, naphthalene-1,5-diisocyanate, 3,3'-dimethyl-4,4'-biphenylene diisocyanate, polymethylene polyphenyl isocyanate, xylylene diisocyanate (XDI), and phenylene diisocyanate; and aliphatic diisocyanate such as 4,4-methylenebis cyclohexyl diisocyanate, hexamethylene diisocyanate, isophorone diisocyanate, cyclohexane-1,3-diylbis(methylene)diisocyanate, and trimethyl hexamethylene diisocyanate.

Note that these polyisocyanates can be used alone or as a mixture of two or more of them, and a part of or the entire structure thereof may be derivatized by isocyanuration, carbodiimidization, or biuretization.

The usage of the polyisocyanate can be designed according to the molar ratio between the isocyanate group of the polyisocyanate and the hydroxyl group of the polycarbonate polyol (isocyanate group/hydroxyl group (mol)), and the molar ratio is preferably 0.8 to 1.5, more preferably 0.9 to 1.3.

(Chain extender)

In the polyurethanization reaction, a chain extender can be used in order to increase the molecular weight. The chain extender to be used can be appropriately selected according to the object and purpose of use, and examples of such a chain extender used in the reaction of the present invention include:

water;
low-molecular polyol such as ethyleneglycol, 1,3-propanediol, 1,4-butanediol, 1,5-pentanediol, 1,6-hexanediol, neopentyl glycol, 1,10-decanediol, 1,1-cyclohexanedimethanol, 1,4-cyclohexanedimethanol, tricyclodecanedimethanol, xylylene glycol, bis(p-hydroxy)diphenyl, bis(p-hydroxyphenyl)propane, 2,2-bis[4-(2-hydroxyethoxy)phenyl]propane, bis[4-(2-hydroxyethoxy)phenyl]sulfone, and 1,1-bis[4-(2-hydroxyethoxy)phenyl]cyclohexane;
high-molecular polyol such as polyester polyol, polyesteramide polyol, polyether polyol, polyether ester polyol, polycarbonate polyol, and polyolefin polyol; and
polyamines such as ethylenediamine, isophoronediamine, 2-methyl-1,5-pentanediamine, aminoethylethanolamine, diethylenetriamine, triethylenetetramine, tetraethylenepentamine, and pentaethylenehexamine.

Note that for the chain extender, the "Latest Polyurethane Application Technology" (CMC Publishing CO., LTD., 1985) can be referred to as a reference, and for the polymer polyol, the "Polyurethane Foam" (KOBUNSHI KANKO KAI, 1984) can be referred to as a reference, for example.

(Urethanization catalyst)

In the polyurethanization reaction, a publicly known polymerization catalyst can be used to improve the reaction rate, and tertiary amine or an organometallic salt of tin or titanium is used.
Note that for the polymerization catalyst, pages 23 to 32 of the "Polyurethane resin" (Keiji, YOSHIDA, Nihon Kogyo Shimbun CO., Ltd., 1969) can be referred to as a reference.

(Solvent)

The polyurethanization reaction can be run in the presence of a solvent, and examples of the solvent to be used include esters such as ethyl acetate, butyl acetate, propyl acetate, γ-butyrolactone, γ-valerolactone, and δ-caprolactone; amides such as dimethylformamide, diethylformamide, and dimethylacetamide; sulfoxides such as dimethylsulfoxide; ethers such as tetrahydrofuran, dioxane, and 2-ethoxyethanol; ketones such as methyl isobutyl ketone and cyclohexanone; and aromatic hydrocarbons such as benzene and toluene.
To run the polyurethanization reaction, a chain terminating agent can be added to adjust the molecular weight.
In addition, a heat stabilizer, light stabilizer, plasticizer, inorganic filler, lubricant, colorant, silicone oil, expanding agent, and flame retardant can be present in the polyurethane according to the objective.
The polyurethane to be obtained can be processed into a soft polyurethane foam, hard polyurethane foam, thermoplastic polyurethane, solvent type polyurethane solution, aqueous polyurethane resin dispersion, and the like. Moreover, these polyurethane products can be processed into molded bodies such as synthetic leather, artificial leather, heat insulator, cushioning medium, adhesive, paint, coating composition, film, and the like.

[Aqueous polyurethane resin dispersion]

Specifically, the aqueous polyurethane resin dispersion can be produced by a method in which a series of processes is performed, which includes a process of producing a urethane prepolymer in which the polycarbonate polyol according to the present invention, polyisocyanate, and an acidic group-containing polyol are caused to react in the presence or absence of a solvent; a process of neutralizing the acidic group in the prepolymer by using a neutralizing agent; a process of dispersing the neutralized prepolymer in an aqueous medium; and a process of running a reaction between the prepolymer dispersed in the aqueous medium and a chain extender, for example.
Note that in each process, a catalyst can be used where necessary to promote the reaction and control the amount of byproducts.
The aqueous polyurethane resin dispersion derived from the polycarbonate polyol according to the present invention can be applied particularly to synthetic leather and artificial leather in order to provide a film having excellent adhesion, flexibility properties and excellent feel of touch as well.
For the polycarbonate polyol, polyisocyanate, solvent, and chain extender, those mentioned above can be used, respectively.

(Acidic group-containing polyol)

In producing an aqueous polyurethane resin dispersion, an acidic group-containing polyol can be used for dispersion into the aqueous medium. Accordingly, the usage of the polyisocyanate can be designed according to the molar ratio between the isocyanate group of the polyisocyanate and the total of the hydroxyl groups of the polyols (all the polyols including the polycarbonate polyol, an acidic group-containing polyol to be described below, and a low-molecular polyol to be described below) (isocyanate group/hydroxyl group (mol)), and is an amount in which the molar ratio becomes preferably 0.8 to 2.0, more preferably 0.9 to 1.8.

Examples of the acidic group-containing polyol include dimethylolalkanoic acids such as 2,2-dimethylolpropionic acid and 2,2-dimethylolbutanoic acid; N,N-bis hydroxyethyl glycine; N,N-bis-hydroxyethyl-alanine; 3,4-dihydroxybutane sulfonic acid; and 3,6-dihydroxy-2-toluene sulfonic acid, and among them, dimethylol alkanoic acid is preferably used and alkanoic acids having 4 to 12 carbon atoms and two methylol groups are more preferably used.

Note that these acidic group-containing polyols can be used alone or as a mixture of two or more of them, and the usage of such an acidic group-containing polyol is not limited to a particular usage as long as the polyurethane resin can be dispersed in the aqueous medium if the usage is employed.

(Neutralizing agent)

Examples of the neutralizing agent include organic amines such as trimethylamine, triethylamine, triisopropylamine, tributylamine, triethanolamine, N-methyldiethanolamine, N-ethyldiethanolamine, N-phenyldiethanolamine, dimethylethanolamine, diethylethanolamine, N-methylmorpholine, and pyridine; inorganic alkali salts such as sodium hydroxide, potassium hydroxide; and ammonia, and among them, organic amines are preferably used and tertiary amines are more preferably used.

Note that these neutralizing agents can be used alone or as a mixture of two or more of them, and the usage of the neutralizing agent is not limited to a particular usage as long as it is used by a usage by which the acidic group of the polyurethane resin can be neutralized.

(Aqueous medium)

Examples of the aqueous medium include water such as clean water, ion exchanged water, distilled water, and ultrapure water; and a mixed medium of water and a hydrophilic organic solvent.

Examples of the hydrophilic organic solvent include ketones such as acetone and ethylmethyl ketone; pyrrolidones such as N-methylpyrrolidone and N-ethylpyrrolidone; ethers such as diethyl ether and dipropylene glycol dimethyl ether; alcohols such as methanol, ethanol, n-propanol, isopropanol, ethyleneglycol, and diethylene glycol; amides such as β-alkoxypropionamide including "Ekuamido" of Idemitsu Kosan Co.,Ltd. as a typical product; and hydroxyl group-containing tertiary amines such as 2-(dimethylamino)-2-methyl-1-propanol (DMAP).

The amount of the hydrophilic organic solvent in the aqueous media is preferably 0 to 20 mass %.

(Low-molecular polyol)

In the urethanization reaction of the present invention, a low-molecular polyol can be present to adjust the molecular weight. Examples of such low-molecular polyols that can be used for the urethanization reaction include ethyleneglycol, 1,3-propanediol, 2-methyl-1,3-propanediol, 2,2-dimethyl-1,3-propanediol, 1,4-butanediol, 1,5-pentanediol, 3-methyl-1,5-pentanediol, and 1,6-hexanediol.

Note that these low-molecular polyols can be used alone or as a mixture of two or more of them.

In addition, the polycarbonate polyol according to the present invention is a polycarbonate polyol, wherein a polyurethane film obtained by a method in which the polycarbonate polyol and 4,4'-dicyclohexylmethane diisocyanate are mixed so that the ratio of isocyanate group/hydroxyl group becomes 0.99 (molar ratio), diluted with γ-butyrolactone so that the solid content became about 30% and reacted, and then the obtained mixture is applied onto a glass plate for hardening has an elongation at break point of 890% or more and a stress at break point of 50 MPa or more.

Further, the polycarbonate polyol according to the present invention is also a polycarbonate polyol, wherein a polyurethane film obtained by a method in which the polycarbonate polyol and 4,4'-dicyclohexylmethane diisocyanate are mixed so that the ratio of isocyanate group/hydroxyl group becomes 0.99 (molar ratio), diluted with γ-butyrolactone so that the solid content became about 30% and reacted, and then the obtained mixture is applied onto a glass plate for hardening has a swelling ratio of less than 15% when the polyurethane film is immersed in an oleic acid at 45°C for 1 week.

[Examples]

Next, the present invention will be specifically described with reference to the following Examples, however, the scope of the present invention is not limited thereto.

(Number Average Molecular Weight)

The number average molecular weight was calculated based on the following expression:

$$\text{Number average molecular weight} = (56100 \times 2)/\text{hydroxyl value}$$

Note that the hydroxyl value of the polycarbonate polyol was measured by titration in compliance with JIS K 1557. The unit for the hydroxyl value is "mgKOH/g".

(Repeating units in the polycarbonate polyol)

1 g of polycarbonate polyol, 30 g of ethanol, and 4 g of potassium hydroxide were mixed, and the mixture was stirred at 95 to 105°C for 1 hour.
After the stirring was completed, the reaction solution was neutralized with hydrochloric acid, the obtained sodium chloride was filtered off, the filtrate was diluted with ethanol 3 times, and the obtained product was analyzed by gas chromatography.
The detected 2-methyl-1,3-propanediol, 2-methyl-1,3-pentanediol, and other monomers were determined by the single-point calibration curve method, and the ratio of each of all the respective repeating units (mol %) to the total amount of all the monomer contents as 100%.
Note that 3-methyl-1,5-pentanediol was used as the standard reference material for the determination of 2-methyl-1,3-pentanediol.
The assay by gas chromatography was performed under the following assay conditions.
Apparatus: Gas chromatograph GC-2010 (a product of Shimadzu Corporation); Column: DB-WAX (a product of a U.S. corporation J & W); film thickness: 0.25 μm, length: 30 m
Column temperature: 60°C (retained for 5 minutes) → 250°C (retained)
Rate of temperature increase: 10°C/min
Carrier gas: helium
Detector: flame ionization detector (FID)
Injected amount: 1 μL

(Example 1; synthesis of polycarbonate polyol)

In a glass round-bottom flask having a rectifying column, a stirring device, a thermometer, and a nitrogen introduction pipe, 425.5 g of 2-methyl-1,3-propanediol (4.72 mol, purity: 98% or more; containing 2.84 g of 2-methyl-1,3-pentanediol (0.024 mol, trans/cis (molar ratio) = 1.62)), 0.86 g of 1,4-butanediol (0.0095 mol, purity: 99% or more), 448.8 g of dimethyl carbonate (4.98 mol, 99% or more), and 0.003 g of lithium hydroxide (0.13 mmol) were mixed together and the mixture was allowed to react at 120 to 200°C for 12 hours under normal pressure while distilling the low boiling point components off.
Further, the reaction was allowed to run at 150 to 170°C for 8 hours under reduced pressure (0.1 to 6.7 kPa) while distilling the components containing 2-methyl-1,3-propanediol off to obtain a polycarbonate polyol (1) as a viscous liquid.
The number average molecular weight of the obtained polycarbonate polyol was 2093, the hydroxyl value was 53.6, and the composition was as follows.

Repeating unit (A); 99.3 mol %
Repeating unit (D); 0.5 mol %
Repeating unit (B); 0.2 mol %
Repeating unit (C); 0 mol %

Other repeating units; 0 mol %

(Example 2; synthesis of polycarbonate polyol)

In a glass round-bottom flask having a rectifying column, a stirring device, a thermometer, and a nitrogen introduction pipe,425.5 g of 2-methyl-1,3-propanediol (4.72 mol, purity: 98% or more; containing 2.8 g of 2-methyl-1,3-pentanediol (0.025 mol, trans/cis (molar ratio) = 1.62)), 0.41 g of γ-butyrolactone (0.0047 mol, purity: 99% or more),

448.8 g of dimethyl carbonate (4.98 mol, 99% or more), and 0.003 g of lithium hydroxide (0.13 mmol) were mixed together and the mixture was allowed to react at 120 to 200°C for 12 hours under normal pressure while distilling the low boiling point components off.

Further, the reaction was allowed to run at 150 to 170°C for 8 hours under reduced pressure (0.1 to 6.7 kPa) while distilling the components containing 2-methyl-1,3-propanediol off to obtain a polycarbonate polyol (2) as a viscous liquid.

The number average molecular weight of the obtained polycarbonate polyol was 2109, the hydroxyl value was 53.2, and the composition was as follows.

Repeating unit (A); 99.4 mol %
Repeating unit (D); 0.5 mol %
Repeating unit (B); 0 mol %
Repeating unit (C); 0.1 mol %

Other repeating units; 0 mol %

(Example 3; synthesis of polycarbonate polyol)

In a glass round-bottom flask having a rectifying column, a stirring device, a thermometer, and a nitrogen introduction pipe, 425.5 g of 2-methyl-1,3-propanediol (4.72 mol, purity: 98% or more; containing 4.51 g of 2-methyl-1,3-pentanediol (0.038 mol, trans/cis (molar ratio) = 1.62)), 0.86 g of 1,4-butanediol (0.0095 mol, purity: 99% or more), 0.41 g of γ-butyrolactone (0.0048 mol, purity: 99% or more), 448.8 g of dimethyl carbonate (4.98 mol, 99% or more), and 0.003 g of lithium hydroxide (0.13 mmol) were mixed together and the mixture was allowed to react at 120 to 200°C for 12 hours under normal pressure while distilling the low boiling point components off.

Further, the reaction was allowed to run at 150 to 170°C for 8 hours under reduced pressure (0.1 to 6.7 kPa) while distilling the components containing 2-methyl-1,3-propanediol off to obtain a polycarbonate polyol (3) as a viscous liquid.

The number average molecular weight of the obtained polycarbonate polyol was 2097, the hydroxyl value was 63.5, and the composition was as follows.

Repeating unit (A); 99.2 mol %
Repeating unit (D); 0.5 mol %
Repeating unit (B); 0.2 mol %
Repeating unit (C); 0.1 mol %

Other repeating units; 0 mol %

Comparative Example 1 (synthesis of polycarbonate polyol)

In a glass round-bottom flask having a rectifying column, a stirring device, a thermometer, and a nitrogen introduction pipe, 425.5 g of 2-methyl-1,3-propanediol (4.72 mol, purity: 98% or more), 448.8 g of dimethyl carbonate (4.98 mol, 99% or more), and 0.003 g of lithium hydroxide (0.13 mmol) were mixed together and the mixture was allowed to react at 120 to 200°C for 12 hours under normal pressure while distilling the low boiling point components off.

Further, the reaction was allowed to run at 150 to 170°C for 8 hours under reduced pressure (0.1 to 6.7 kPa) while distilling the components containing 2-methyl-1,3-propanediol off to obtain a polycarbonate polyol (4) as a viscous liquid.

The number average molecular weight of the obtained polycarbonate polyol was 2093, the hydroxyl value was 53.6, and the composition was as follows.

Repeating unit (A); 99.9 mol %
Repeating unit (D); 0.1 mol %

Other repeating units; 0 mol %

(Comparative Example 2; synthesis of polycarbonate polyol)

In a glass round-bottom flask having a rectifying column, a stirring device, a thermometer, and a nitrogen introduction pipe, 425.5 g of 2-methyl-1,3-propanediol (4.72 mol, purity: 98% or more; containing 7.39 g of 2-methyl-1,3-pentanediol (0.063 mol, trans/cis (molar ratio) = 1.62)), 5.6 g of 1,4-butanediol (0.062 mol, purity: 99% or more), 448.8 g of dimethyl carbonate (4.98 mol, 99% or more), and 0.003 g of lithium hydroxide (0.13 mmol) were mixed together and the mixture was allowed to react at 120 to 200°C for 12 hours under normal pressure while distilling the low boiling point components off.

Further, the reaction was allowed to run at 150 to 170°C for 8 hours under reduced pressure (0.1 to 6.7 kPa) while distilling the components containing 2-methyl-1,3-propanediol off to obtain a polycarbonate polyol (5) as a viscous liquid.

The number average molecular weight of the obtained polycarbonate polyol was 2086, the hydroxyl value was 53.8, and the composition was as follows.

Repeating unit (A); 98.2 mol %
Repeating unit (D); 0.5 mol %
Repeating unit (B); 1.3 mol %
Repeating unit (C); 0 mol %

Other repeating units; 0 mol %

(Example 4; synthesis of polycarbonate polyol)

Except that the usage of 2-methyl-1,3-propanediol and 2-methyl-1,3-pentanediol was changed from the usage employed in Example 3, the reaction was run in a similar manner as Example 3 to obtain a polycarbonate polyol (6).

The number average molecular weight of the obtained polycarbonate polyol was 2097, the hydroxyl value was 53.5, and the composition was as follows.

Repeating unit (A); 99.6 mol %
Repeating unit (D); 0.25 mol %
Repeating unit (B); 0.1 mol %
Repeating unit (C); 0.05 mol %

Other repeating units; 0 mol %

(Example 5; synthesis of polycarbonate polyol)

Except that the usage of 2-methyl-1,3-propanediol, 2-methyl-1,3-pentanediol, and 1,4-butanediol was changed from the usage employed in Example 3, the reaction was run in a similar manner as Example 3 to obtain a polycarbonate polyol (7).

The number average molecular weight of the obtained polycarbonate polyol was 2097, the hydroxyl value was 53.5, and the composition was as follows.

Repeating unit (A); 99.1 mol %
Repeating unit (D); 0.8 mol %
Repeating unit (B); 0.1 mol %
Repeating unit (C); 0 mol %

Other repeating units; 0 mol %

(Synthesis of polyurethane)

70.6 g of polycarbonate polyol synthesized in the above Examples and Comparative Examples and 10.5 g of 4,4'-dicyclohexylmethane diisocyanate (adjusted so that the ratio of isocyanate group/hydroxyl group = 0.99 (molar ratio)) were diluted with γ-butyrolactone so that the ratio of the solid content becomes 30%, then 0.08 g of dibutyltin dilaurate was added, and the reaction was allowed to run at 75 to 85°C for 10 hours to obtain a solution of polyurethane in γ-butyrolactone.

The obtained solution of polyurethane was applied onto a glass plate, dried at 70°C for 1 hour and then at 120°C for 3 hours to obtain a polyurethane film.

The obtained polyurethane film was evaluated for the elongation at break point, stress at break point, resistance to oleic acid, and tackiness by the following evaluation method.

(Elongation at break point, stress at break point)

A polyurethane film with the thickness of about 0.05 mm was formed, the obtained film was cut into a strip-like plate shape of 10 mm × 80 mm, then the strip-shaped film was allowed to cure for 1 day in a thermostatic chamber at 23°C, 50% RH, and the obtained film was used as the evaluation sample.
The sample was tensioned at the chuck gap of 20 mm and the stress rate of 100 mm/min by using a TENSILON Tensile Tester (a product of ORIENTEC Co., LTD., model No.: RTC-1250A) in a thermostatic chamber kept at 23°C and 50% RH for measurement of the elongation at break point (%) and the stress at break point (MPa).

(Resistance to oleic acid)

A polyurethane having a thickness of about 0.05 mm was immersed in oleic acid at 45°C for 1 week and then the swelling rate (%) was measured. The resistance to oleic acid was by the following standard according to the degree of the swelling rate.
Double circle; swelling rate was less than 10%
Circle; swelling rate was 10% or more and less than 15%
Triangle; swelling rate 15% or more

(Tackiness)

The solution of polyurethane mentioned above was applied onto a 10 cm × 10 cm glass plate to allow a polyurethane film to form, then a glass plate of the same size was laminated onto the glass plate having the polyurethane film, and then a 5 kg weight was placed thereon and the plates including the polyurethane film were allowed to stand for 1 hour.
Then the force required to separate the glass plates from each other was evaluated as the tackiness by the following standard.
Circle; no tackiness (the glass plates were easily separable with almost no force applied)
Triangle; (the glass plates were separable with slight force)
Cross; (the glass plates were separable only when a considerably strong force was applied)
Table 1 shows the results of the above evaluation.

[Table 1]

| | Physical properties of polyurethane | | | |
|---|---|---|---|---|
| | Elongation at break point (%) | Stress at break point (MPa) | Resistance to oleic acid | Tackiness |
| Example 1 | 930 | 58 | ○ | ○ |
| Example 2 | 898 | 52 | ◎ | ○ |
| Example 3 | 934 | 59 | ◎ | ○ |
| Comparative Example 1 | 450 | 25 | ○ | ○ |
| Comparative Example 2 | 780 | 45 | ○ | Δ |
| Example 4 | 928 | 56 | ◎ | ○ |
| Example 5 | 932 | 58 | ○ | ○ |

From the above-described results, it was found that the polycarbonate polyols with the ratio of the repeating units in the ranges described above were good in all of the elongation at break point, stress at break point, resistance to oleic acid, and tackiness when it is converted into polyurethane.
In addition, it was found that the polyurethane exhibits a good tackiness, a higher elongation at break point (890% or more) and a higher stress at break point (50 MPa or more), and a high resistance to oleic acid if the polycarbonate polyol includes the repeating unit (A) by 99.0 to 99.8 mol % and the repeating unit (D) by 0.1 to 0.8 mol % (comparison between Examples 1 to 5 and Comparative Examples 1 and 2).
As described above, it has been clarified that the polycarbonate polyol according to the present invention

exhibits a high performance when it is converted into polyurethane by adjusting the repeating unit (A) derived from 2-methyl-1,3-propanediol and the repeating unit (D) derived from 2-methyl-1,3-pentanediol to a specific ratio. Moreover, it has been clarified from each of the Example that the elongation at break point and the stress at break point improve when the polycarbonate polyol includes the repeating unit (B) derived from 1,4-butanediol in a specific ratio or less and that the resistance to oleic acid improves when the polycarbonate polyol includes the repeating unit (C) derived from γ-butyrolactone in a specific ratio or less.

(Synthesis of aqueous polyurethane resin dispersion)

In a reactor having a stirring device and a heater, 275 g of polycarbonate polyol obtained in Example 1, 14.7g of 2,2-dimethylolpropionic acid (0.11 mol), 83.5 g of isophorone diisocyanate (0.38 mol), 122 g of N-ethyl-2-pyrrolidone, and 0.3 g of dibutyltin(IV) dilaurate (0.47 mmol) were mixed and the mixture was allowed to react in a nitrogen atmosphere at 80 to 90°C for 6 hours (amount of residual isocyanate group after the reaction was completed: 0.40 mmol/g).
The obtained reaction solution was cooled to 80°C, 11.0 g of triethylamine (0.11 mol) was added thereto for neutralization, and then 396 g of the reaction solution obtained by the above manipulation was added to 580 g of strongly stirred water.
Further, 22.9 g of 35 % by mass of an aqueous solution of 2-methyl-1,5-pentanediamine was added thereto to obtain an aqueous polyurethane resin dispersion A.

(Synthesis of polyurethane resin film)

The aqueous polyurethane resin dispersion A was coated uniformly onto a polyethylene terephthalate (PET) film so that the film thickness after drying would become about 80 μm. Then the PET film having the dispersion A was allowed to stand at room temperature for 15 hours, and then dried at 60°C for 1 hour and then at 120°C for 2 hours to form a polyurethane resin.
Then the polyurethane resin was separated from the PET film and the resultant was dried at 120°C for 2 hours to obtain a polyurethane resin film.
Note that the manipulation similar to that described above was performed for the polycarbonate polyol obtained by Example 2 and Comparative Example 1 to obtain a polyurethane resin film A, respectively.
For comparison, by using polycarbonate polyol synthesized by a method similar to that in Example 1 except that 1,3-propanediol was used as a raw material (molecular weight; 1988) and polycarbonate polyol synthesized from 1,6-hexanediol and dimethyl carbonate (ETERNACOLL (registered trademark) UH-200, a product of UBE INDUSTRIES, LTD., molecular weight; 2000), aqueous polyurethane resin dispersions B and C were synthesized by a method similar to the above-described method to further obtain polyurethane resin films B and C.
The modulus of elasticity (MPa), elongation at break point (%), stress at break point (MPa), tackiness, and feel of touch of the obtained polyurethane resin films were measured, and evaluated by the following method.

(Modulus of elasticity)

The modulus of elasticity of the cured product was measured by a method in compliance with JIS K 7311. Note that the measurement was performed under the condition of measurement temperature of 23°C, humidity of 50%, and the stress rate of 100 mm/min.

(Elongation at break point, stress at break point)

A polyurethane film with the thickness of about 0.05 mm was formed, the obtained film was cut into a strip-like plate shape of 10 mm × 80 mm, then the strip-shaped film was allowed to cure for 1 day in a thermostatic chamber at 23°C, 50% RH, and the obtained film was used as the evaluation sample.
The sample was tensioned at the chuck gap of 20 mm and the stress rate of 100 mm/min by using a TENSILON Tensile Tester (a product of ORIENTEC Co., LTD., model No.: RTC-1250A) in a thermostatic chamber kept at 23°C and 50% RH for measurement of the elongation at break point (%) and the stress at break point (MPa).

(Tackiness)

The solution of polyurethane mentioned above was applied onto a 10 cm × 10 cm glass plate to allow a polyurethane film to form, then a glass plate of the same size was laminated onto the glass plate having the polyurethane film, and then a 5 kg weight was placed thereon and allowed to stand for 1 hour.
Then the force required to separate the glass plates from each other was evaluated as the tackiness by the

following standard.
Circle; no tackiness (the glass plates were easily separable with almost no force applied)
Triangle; (the glass plates were separable with slight force)
Cross; (the glass plates were separable only when a considerably strong force was applied)

(Feel of touch (soft feel))

The feel of touch of the cured product was measured by touching the surface of the cured product for evaluation.
Circle; of good elasticity and a silk-like feel of touch
Triangle; of slightly low elasticity and a gripping feel of touch
Cross; of no elasticity and a hard feel of touch

[Table 2]

| | Physical properties of the polyurethane resin film | | | | |
|---|---|---|---|---|---|
| | Modulus of elasticity (MPa) | Elongation at break point (%) | Stress at break point (MPa) | Tackiness | Feel of touch |
| A | 93.9 | 769.5 | 109.9 | ○ | ○ |
| B | 79.9 | 632.3 | 98.2 | ○ | Δ |
| C | 23.1 | 598.2 | 82.3 | × | Δ |

From the above-described results, it was found that the polyurethane resin film obtained by using the aqueous polyurethane resin dispersion derived from the polycarbonate polyol according to the present invention were good in all of the modulus of elasticity, elongation at break point, and stress at break point.
In addition, it was also found that the film was excellent in tackiness and had an extremely good feel of touch.

[Industrial applicability]

The polycarbonate polyol according to the present invention has a high elongation at break point and stress at break point and further an excellent tackiness and resistance to oleic acid when it is converted into polyurethane. Accordingly, the polycarbonate polyol according to the present invention is a compound useful as a raw material of various types of polyurethane resins used for coating of sheets and leather.

**Claims**

1. A polycarbonate polyol comprising:

    repeating units represented by the following Formula (A);
    repeating units represented by the following Formula (D); and
    a terminal hydroxyl group,
    wherein a ratio of the repeating units represented by the following Formula (A) is 99.0 to 99.8 mol % and a ratio of the repeating units represented by the following Formula (D) is 0.1 to 0.8 mol % to a total of all repeating units included in the polycarbonate polyol.

[Formula 9]

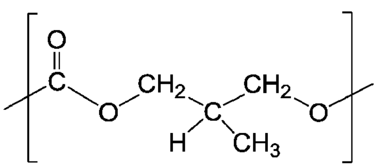

(A)

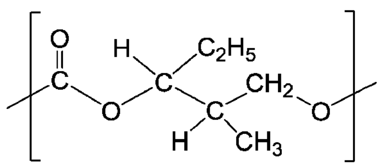

(D)

2. The polycarbonate polyol according to Claim 1, further comprising repeating units represented by the following

Formula (B) at a ratio of 0.5 mol % or less to all repeating units included in the polycarbonate polyol.

[Formula 10]

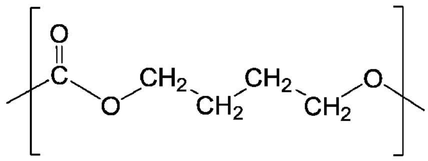

(B)

3. The polycarbonate polyol according to Claim 1, further comprising repeating units represented by the following Formula (C) at a ratio of 0.2 mol % or less to all repeating units included in the polycarbonate polyol.

[Formula 11]

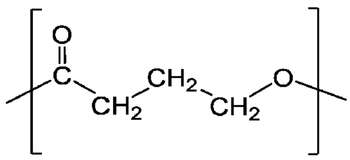

(C)

4. The polycarbonate polyol according to Claim 1, further comprising repeating units represented by the Formula (B) at a ratio of 0.5 mol % or less to all repeating units included in polycarbonate polyol, and repeating units represented by the Formula (C) at a ratio of 0.2 mol % or less to all repeating units included in polycarbonate polyol.

5. The polycarbonate polyol according to any one of Claims 1 to 4, wherein a molar ratio of a trans type/cis type in a conformational isomer included in repeating units represented by the Formula (D) is 1.01 to 100.

6. A polycarbonate polyol comprising:

repeating units represented by the following Formula (A);
repeating units represented by the following Formula (B); and
a terminal hydroxyl group,
wherein a ratio of the unit represented by the following Formula (A) is 99.0 to 99.8 mol % and a ratio of the unit represented by the following Formula (B) is 0.5 mol % or less respectively to a total of all repeating units included in the polycarbonate polyol.

[Formula 12]

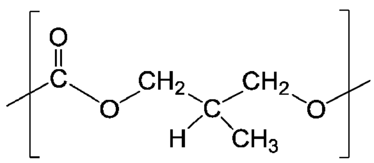

(A)

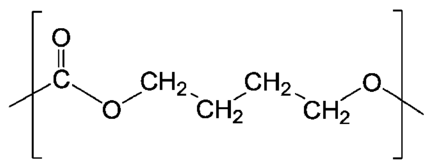

(B)

7. A polycarbonate polyol comprising:

repeating units represented by the Formula (A);
repeating units represented by the following Formula (C); and
a terminal hydroxyl group,
wherein a ratio of the unit represented by the above Formula (A) is 99.0 to 99.8 mol %, a ratio of the unit represented by the following Formula (C) is 0.2 mol % or less respectively to a total of all repeating units included

in the polycarbonate polyol.

[Formula 13]

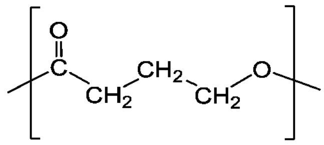

(C)

8. The polycarbonate polyol according to Claim 6, comprising:

repeating units represented by the above Formula (A);
repeating units represented by the above Formula (B);
repeating units represented by the above Formula (C); and
a terminal hydroxyl group,
wherein a ratio of the unit represented by the above Formula (A) is 99.0 to 99.8 mol %, a ratio of the unit represented by the above Formula (B) is 0.5 mol % or less, and a ratio of the unit represented by the above Formula (C) is 0.2 mol % or less, respectively to a total of all repeating units included in the polycarbonate polyol.

9. The polycarbonate polyol according to Claim 8, further comprising repeating units represented by the following Formula (D) at a ratio of 0.1 to 0.8 mol % to all repeating units included in the polycarbonate polyol.

[Formula 14]

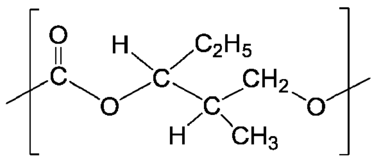

(D)

10. A polyurethane obtained by using the polycarbonate polyol according to any one of Claims 1 to 9.

11. The polyurethane according to claim 10, which is obtained by using the polycarbonate polyol according to any one of Claims 6 to 8, wherein a film of the polyurethane has an elongation at break point of 890% or more and a stress at break point of 50 MPa or more, the film being obtained by a method in which the polycarbonate polyol according to any one of Claims 6 to 8 and 4,4'-dicyclohexylmethane diisocyanate are mixed so that a ratio of isocyanate group/hydroxyl group becomes 0.99 (molar ratio), then diluted with $\gamma$-butyrolactone so that a solid content becomes about 30% and reacted, and then the obtained mixture is applied onto a glass plate for hardening.

12. The polyurethane according to claim 10, which is obtained by using the polycarbonate polyol according to any one of Claims 6 to 8, wherein a film of the polyurethane has a swelling ratio of less than 15% when the film is immersed in oleic acid at 45°C for 1 week, the film being obtained by a method in which the polycarbonate polyol according to any one of Claims 6 to 8 and 4,4'-dicyclohexylmethane diisocyanate are mixed so that a ratio of isocyanate group/hydroxyl group becomes 0.99 (molar ratio), then diluted with $\gamma$-butyrolactone so that a solid content becomes about 30% and reacted, and then the obtained mixture is applied onto a glass plate for hardening.

13. Synthetic leather obtained by using the polycarbonate polyol according to any one of Claims 1 to 9.

14. An aqueous polyurethane resin dispersion obtained by using the polycarbonate polyol according to any one of Claims 1 to 9.

**Patentansprüche**

1. Polycarbonatpolyol, umfassend:

   Wiederholungseinheiten, die durch die folgende Formel (A) dargestellt werden,
   Wiederholungseinheiten, die durch die folgende Formel (D) dargestellt werden, und
   eine endständige Hydroxylgruppe,
   wobei ein Anteil der durch die folgende Formel (A) dargestellten Wiederholungseinheiten 99,0 bis 99,8 mol-% beträgt und ein Anteil der durch die folgende Formel (D) dargestellten Wiederholungseinheiten 0,1 bis 0,8 mol-% beträgt, in Bezug auf die Summe aller Wiederholungseinheiten, die in dem Polycarbonatpolyol enthalten sind.

[Formel 9]

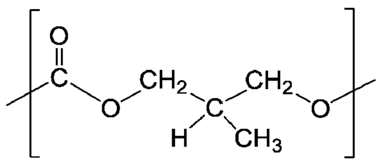

(A)

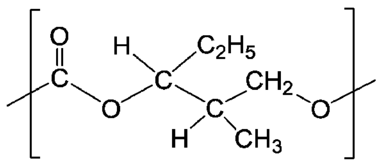

(D)

2. Polycarbonatpolyol gemäß Anspruch 1, ferner umfassend Wiederholungseinheiten, die durch die folgende Formel (B) dargestellt werden, zu einem Anteil von 0,5 mol-% oder weniger in Bezug auf alle Wiederholungseinheiten, die in dem Polycarbonatpolyol enthalten sind.

[Formel 10]

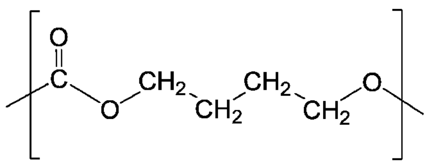

(B)

3. Polycarbonatpolyol gemäß Anspruch 1, ferner umfassend Wiederholungseinheiten, die durch die folgende Formel (C) dargestellt werden, zu einem Anteil von 0,2 mol-% oder weniger in Bezug auf alle Wiederholungseinheiten, die in dem Polycarbonatpolyol enthalten sind.

[Formel 10]

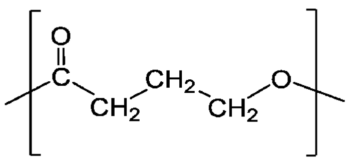

(C)

4. Polycarbonatpolyol gemäß Anspruch 1, ferner umfassend Wiederholungseinheiten, die durch die Formel (B) dargestellt werden, zu einem Anteil von 0,5 mol-% oder weniger in Bezug auf alle Wiederholungseinheiten, die in dem Polycarbonatpolyol enthalten sind, und Wiederholungseinheiten, die durch die Formel (C) dargestellt werden, zu einem Anteil von 0,2 mol-% oder weniger in Bezug auf alle Wiederholungseinheiten, die in dem Polycarbonatpolyol enthalten sind.

**5.** Polycarbonatpolyol gemäß irgendeinem der Ansprüche 1 bis 4, wobei ein trans-Typ/cis-Typ-Molverhältnis in einem Konformationsisomer, das in den durch die Formel (D) dargestellten Wiederholungseinheiten enthalten ist, 1,01 bis 100 beträgt.

**6.** Polycarbonatpolyol, umfassend:

Wiederholungseinheiten, die durch die folgende Formel (A) dargestellt werden,
Wiederholungseinheiten, die durch die folgende Formel (B) dargestellt werden, und
eine endständige Hydroxylgruppe,
wobei ein Anteil der durch die folgende Formel (A) dargestellten Einheit 99,0 bis 99,8 mol-% beträgt und ein Anteil der durch die folgende Formel (B) dargestellten Einheit 0,5 mol-% oder weniger beträgt, jeweils in Bezug auf die Summe aller Wiederholungseinheiten, die in dem Polycarbonatpolyol enthalten sind.

[Formel 12]

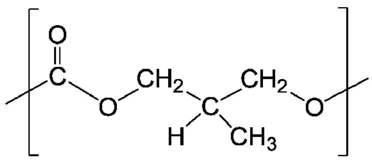

(A)

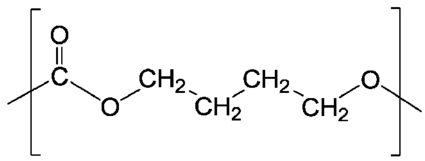

(B)

**7.** Polycarbonatpolyol, umfassend:

Wiederholungseinheiten, die durch die folgende Formel (A) dargestellt werden,
Wiederholungseinheiten, die durch die folgende Formel (C) dargestellt werden, und
eine endständige Hydroxylgruppe,
wobei ein Anteil der durch die folgende Formel (A) dargestellten Einheit 99,0 bis 99,8 mol-% beträgt und ein Anteil der durch die folgende Formel (C) dargestellten Einheit 0,2 mol-% oder weniger beträgt, jeweils in Bezug auf die Summe aller Wiederholungseinheiten, die in dem Polycarbonatpolyol enthalten sind.

[Formel 13]

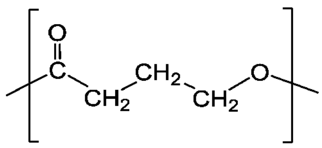

(C)

**8.** Polycarbonatpolyol gemäß Anspruch 6, umfassend:

Wiederholungseinheiten, die durch die obige Formel (A) dargestellt werden,
Wiederholungseinheiten, die durch die obige Formel (B) dargestellt werden,
Wiederholungseinheiten, die durch die obige Formel (C) dargestellt werden, und
eine endständige Hydroxylgruppe,
wobei ein Anteil der durch die obige Formel (A) dargestellten Einheit 99,0 bis 99,8 mol-% beträgt, ein Anteil der durch die obige Formel (B) dargestellten Einheit 0,5 mol-% oder weniger beträgt und ein Anteil der durch die obige Formel (C) dargestellten Einheit 0,2 mol-% oder weniger beträgt, jeweils in Bezug auf die Summe aller Wiederholungseinheiten, die in dem Polycarbonatpolyol enthalten sind.

**9.** Polycarbonatpolyol gemäß Anspruch 8, ferner umfassend Wiederholungseinheiten, die durch die folgende Formel (D) dargestellt werden, zu einem Anteil von 0,1 bis 0,8 mol-% in Bezug auf alle Wiederholungseinheiten, die in dem Polycarbonatpolyol enthalten sind.

[Formel 14]

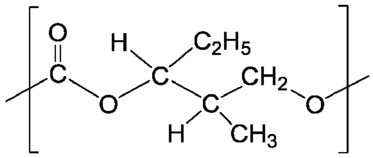

(D)

**10.** Polyurethan, erhalten unter Verwendung des Polycarbonatpolyols gemäß irgendeinem der Ansprüche 1 bis 9.

**11.** Polyurethan gemäß Anspruch 10, das unter Verwendung des Polycarbonatpolyols gemäß irgendeinem der Ansprüche 6 bis 8 erhalten wird, wobei eine Folie aus dem Polyurethan einen Bruchdehnungspunkt von 890 % oder mehr und einen Bruchspannungspunkt von 50 MPa oder mehr aufweist, wobei die Folie durch ein Verfahren erhalten wird, in dem das Polycarbonatpolyol gemäß irgendeinem der Ansprüche 6 bis 8 und 4,4'-Dicyclohexylmethandiisocyanat so gemischt werden, dass ein Isocyanatgruppe/Hydroxylgruppe-Verhältnis 0,99 beträgt (Molverhältnis), dann mit γ-Butyrolacton so verdünnt wird, dass ein Feststoffgehalt etwa 30 % beträgt, und umgesetzt wird und dann die erhaltene Mischung auf einer Glasplatte zum Härten aufgetragen wird.

**12.** Polyurethan gemäß Anspruch 10, das unter Verwendung des Polycarbonatpolyols gemäß irgendeinem der Ansprüche 6 bis 8 erhalten wird, wobei eine Folie aus dem Polyurethan ein Quellverhältnis von weniger als 15 % aufweist, wenn die Folie in Ölsäure bei 45°C für 1 Woche eingetaucht wird, wobei die Folie durch ein Verfahren erhalten wird, in dem das Polycarbonatpolyol gemäß irgendeinem der Ansprüche 6 bis 8 und 4,4'-Dicyclohexylmethandiisocyanat so gemischt werden, dass ein Isocyanatgruppe/Hydroxylgruppe-Verhältnis 0,99 beträgt (Molverhältnis), dann mit γ-Butyrolacton so verdünnt wird, dass ein Feststoffgehalt etwa 30 % beträgt, und umgesetzt wird und dann die erhaltene Mischung auf einer Glasplatte zum Härten aufgetragen wird.

**13.** Kunstleder, erhalten unter Verwendung des Polycarbonatpolyols gemäß irgendeinem der Ansprüche 1 bis 9.

**14.** Wässrige Polyurethanharzdispersion, erhalten unter Verwendung des Polycarbonatpolyols gemäß irgendeinem der Ansprüche 1 bis 9.

## Revendications

**1.** Polycarbonate polyol comprenant :

des unités récurrentes représentées par la formule (A) suivante ;
des unités récurrentes représentées par la formule (D) suivante ; et
un groupe hydroxyle terminal,
dans lequel un rapport des unités récurrentes représentées par la formule (A) suivante est entre 99,0 et 99,8 % en mole et un rapport des unités récurrentes représentées par la formule (D) suivante est entre 0,1 et 0,8 % en mole par rapport à un total de toutes les unités récurrentes incluses dans le polycarbonate polyol.

[Formule 9]

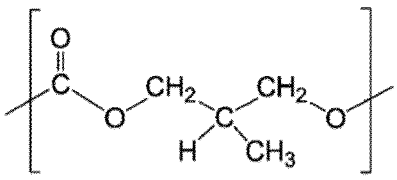

(A)

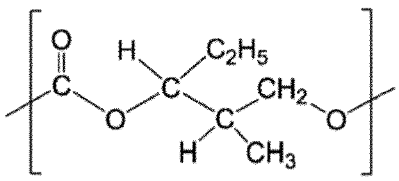

(D)

**2.** Polycarbonate polyol selon la revendication 1, comprenant en outre des unités récurrentes représentées par la

formule (B) suivante à un rapport de 0,5 % en mole ou moins par rapport à toutes les unités récurrentes incluses dans le polycarbonate polyol.

[Formule 10]

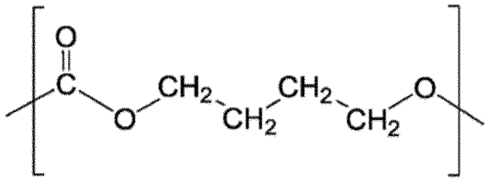

(B)

3. Polycarbonate polyol selon la revendication 1, comprenant en outre des unités récurrentes représentées par la formule (C) suivante à un rapport de 0,2 % en mole ou moins par rapport à toutes les unités récurrentes incluses dans le polycarbonate polyol.

[Formule 11]

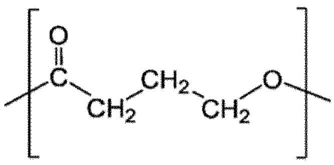

(C)

4. Polycarbonate polyol selon la revendication 1, comprenant en outre des unités récurrentes représentées par la formule (B) à un rapport de 0,5 % en mole ou moins par rapport à toutes les unités récurrentes incluses dans le polycarbonate polyol, et des unités récurrentes représentées par la formule (C) à un rapport de 0,2 % en mole ou moins par rapport à toutes les unités récurrentes incluses dans le polycarbonate polyol.

5. Polycarbonate polyol selon l'une quelconque des revendications 1 à 4, dans lequel un rapport molaire d'un type trans/type cis dans un isomère conformationnel inclus dans des unités récurrentes représentées par la formule (D) est entre 1,01 et 100.

6. Polycarbonate polyol comprenant :

des unités récurrentes représentées par la formule (A) suivante ;
des unités récurrentes représentées par la formule (B) suivante ; et
un groupe hydroxyle terminal,
dans lequel un rapport de l'unité représentée par la formule (A) suivante est entre 99,0 et 99,8 % en mole et un rapport de l'unité représentée par la formule (B) suivante est 0,5 % en mole ou moins, respectivement, par rapport à un total de toutes les unités récurrentes incluses dans le polycarbonate polyol.

[Formule 12]

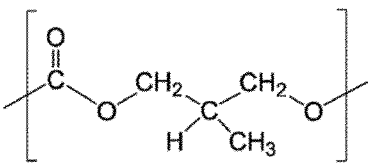

(A)

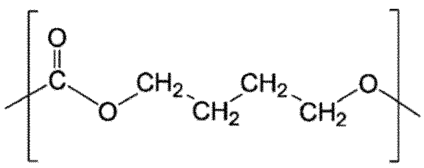

(B)

**7.** Polycarbonate polyol comprenant :

des unités récurrentes représentées par la formule (A) ;
des unités récurrentes représentées par la formule (C) suivante ; et
un groupe hydroxyle terminal,
dans lequel un rapport de l'unité représentée par la formule (A) ci-dessus est entre 99,0 et 99,8 % en mole, un rapport de l'unité représentée par la formule (C) suivante est 0,2 % en mole ou moins, respectivement, par rapport à un total de toutes les unités récurrentes incluses dans le polycarbonate polyol.

[Formule 13]

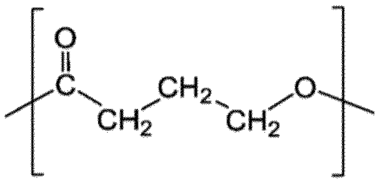

(C)

**8.** Polycarbonate polyol selon la revendication 6, comprenant :

des unités récurrentes représentées par la formule (A) ci-dessus ;
des unités récurrentes représentées par la formule (B) ci-dessus ;
des unités récurrentes représentées par la formule (C) ci-dessus ; et
un groupe hydroxyle terminal,
dans lequel un rapport de l'unité représentée par la formule (A) ci-dessus est entre 99,0 et 99,8 % en mole, un rapport de l'unité représentée par la formule (B) ci-dessus est 0,5 % en mole ou moins, et un rapport de l'unité représentée par la formule (C) ci-dessus est 0,2 % en mole ou moins, respectivement, par rapport à un total de toutes les unités récurrentes incluses dans le polycarbonate polyol.

**9.** Polycarbonate polyol selon la revendication 8, comprenant en outre des unités récurrentes représentées par la formule (D) suivante à un rapport entre 0,1 et 0,8 % en mole sur toutes les unités récurrentes incluses dans le polycarbonate polyol.

[Formule 14]

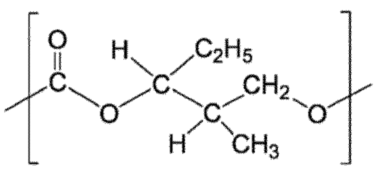

(D)

**10.** Polyuréthane obtenu en utilisant le polycarbonate polyol selon l'une quelconque des revendications 1 à 9.

**11.** Polyuréthane selon la revendication 10, qui est obtenu en utilisant le polycarbonate polyol selon l'une quelconque des revendications 6 à 8, dans lequel un film du polyuréthane présente un allongement au niveau d'un point de rupture de 890 % ou plus et une tension au niveau d'un point de rupture de 50 MPa ou plus, le film étant obtenu par un procédé dans lequel le polycarbonate polyol selon l'une quelconque des revendications 6 à 8 et le 4,4'-dicyclohexylméthane diisocyanate sont mélangés de telle sorte qu'un rapport du groupe isocyanate/groupe hydroxyle devienne 0,99 (rapport molaire), ensuite dilués avec le γ-butyrolactone de telle sorte que la teneur en solides devienne environ 30 %, et sont mis à réagir et, ensuite, le mélange obtenu est appliqué sur une plaque de verre pour durcissement.

**12.** Polyuréthane selon la revendication 10, qui est obtenu en utilisant le polycarbonate polyol selon l'une quelconque

des revendications 6 à 8, dans lequel un film du polyuréthane présente un taux de gonflement de moins de 15% lorsque le film est immergé dans de l'acide oléique à 45 °C pendant 1 semaine, le film étant obtenu par un procédé dans lequel le polycarbonate polyol selon l'une quelconque des revendications 6 à 8 et le 4,4'-dicyclohexylméthane diisocyanate sont mélangés de telle sorte qu'un rapport du groupe isocyanate/groupe hydroxyle devienne 0,99 (rapport molaire), ensuite dilués avec le γ-butyrolactone de telle sorte que la teneur en solides devienne environ 30 %, et sont mis à réagir et, ensuite, le mélange obtenu est appliqué sur une plaque de verre pour durcissement.

**13.** Cuir synthétique obtenu en utilisant le polycarbonate polyol selon l'une quelconque des revendications 1 à 9.

**14.** Dispersion aqueuse de résine de polyuréthane obtenue en utilisant le polycarbonate polyol selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005325219 A
- JP 2006225543 A
- WO 2006088152 A1
- JP 5068159 B
- JP 2012046659 A
- JP 5614637 B
- WO 2006088152 A


### Non-patent literature cited in the description


- Latest Polyurethane Application Technology. CMC Publishing CO., LTD, 1985
- Polyurethane Foam. KOBUNSHI KANKO KAI, 1984
- Polyurethane resin. Keiji, YOSHIDA, Nihon Kogyo Shimbun CO., Ltd, 1969, 23-32